(19) Europäisches Patentamt
European Patent Office
Office européen des brevets

(11) EP 3 690 978 A1

(12) EUROPEAN PATENT APPLICATION

(43) Date of publication:
**05.08.2020 Bulletin 2020/32**

(51) Int Cl.:
***H01M 2/10** (2006.01)*

(21) Application number: **19155031.8**

(22) Date of filing: **01.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.
4612 PX Bergen op Zoom (NL)**

(72) Inventors:
- **ARMSTRONG, Mark
4612 Bergen op Zoom (NL)**
- **ADRIAANSE, Sanne
4612 Bergen op Zoom (NL)**
- **VAN DER WEELE, Chris
4612 Bergen op Zoom (NL)**
- **HUIJS, Franciscus Maria
4612 Bergen op Zoom (NL)**

(74) Representative: **Elzaburu S.L.P.
Miguel Angel 21, 2nd floor
28010 Madrid (ES)**

# (54) INJECTION MOLDABLE, FLAME RETARDANT LONG GLASS FIBER BASED MATERIALS FOR ELECTRIC VEHICLE BATTERY CASING

(57) Disclosed herein are compositions for a battery casing battery casing formed from a composition comprising: from about 10 wt. % to about 80 wt. % of a composite comprising a polyester resin and a long glass fiber, wherein the composite comprises from about 25 % to about 70 % long glass fiber based on the total weight of the composite; from about 0.01 wt. % to about 50 wt. % of a flame retardant masterbatch; wherein the combined weight percent value of all components does not exceed 100 wt. %, and all weight percent values are based on the total weight of the composition. The composition exhibits a V0 rating at 1.5 mm and 3.0 mm thickness when tested in accordance with UL94.

EP 3 690 978 A1

## Description

TECHNICAL FIELD

The disclosure concerns compositions for battery casings, specifically compositions that exhibit improved performance for electric vehicle battery casings.

BACKGROUND

Electric vehicles generally require at least one high voltage battery to power their electric motors. Such vehicles also require an increasing array of higher voltage (that is, greater than 12 volts (V), but less than 60V) features and devices. The battery 'pack' of an electric vehicle is conventionally constructed from a number of discrete electrochemical cells that are electrically grouped in modules and placed inside a protective housing or casing. Electric vehicle battery casings are typically made from steel, galvanized steel or other alloys/metal and often feature a two-part construction consisting of a plate and lid. These materials may add considerable weight to the vehicle mass. The necessary elements (such as, cell groups/modules, thermal management equipment, sensors, cabling) are assembled within the plate and sealed from the external environment by clamping the lid portion to the plate with satisfactory sealing.

Some designs for battery casings feature a metallic plate and a composite lid structure, such as sheet mold composite (SMC), thus forming a metal-composite hybrid. The base plate is most typically made from tough, rigid metal to protect the battery from intrusion of objects originating from the vehicle undercarriage, be these objects debris or, for example, a jacking device. For aesthetic or functional purposes (such as, flame retardancy), the structures may be painted or coated with suitable materials, including, for example electromagnetic shielding materials, or flame-retardants.

With a change in design and suitable impact behavior, fully plastic solutions for battery casings are a potentially appealing alternative.

US Patent No. 8,835,033 discloses a battery pack case assembly for electric and hybrid vehicles using a plastic composite and method for manufacturing the same. The battery pack case assembly includes a case body and a cover. The case body is formed of a plastic composite in which a long fiber or a blend of a long fiber and a continuous fiber is used as a reinforcing fiber in a plastic matrix. A separate reinforced member is bonded to both side bracket parts for coupling to a vehicle body, and is formed of a plastic composite in which a long fiber, a continuous, or a blend of a long fiber and a continuous fiber is used as the reinforcing fiber in the plastic matrix.

Chinese Patent No. 103113706 describes a lithium battery case flame-retardant material based on long-glass-fiber-reinforced polypropylene. The lithium battery case flame-retardant material is based on long-glass-fiber-reinforced polypropylene. More specifically, the lithium battery case flame-retardant material is prepared from the following components in parts by weight: polypropylene, continuous glass fiber, coupling agent, main antioxidant, auxiliary antioxidant, lubricant, compatibilizer, composite flame retardant and black master batch. To prepare the composition for the case, all the components expect the continuous glass fiber are added into a high-speed mixer, mixed uniformly, sent into an extruding machine, melt extruded into an impregnator, and meanwhile, the continuous glass fiber is sent into the impregnator to carry out disperse impregnation with the molten material; and finally, die drawing at a setting port of the impregnator, and is cooled.

Chinese Patent Application No. CN203562452 describes an upper cover of a tank of battery set. The upper comprises an upper cover body and radiating valves; the upper cover body is made of long glass-fiber flame-retardant reinforced polypropylene materials and comprises a top wall and side walls; radiating holes are formed in the side walls, and the radiating valves are mounted at the radiating holes. The upper cover of the tank of the battery lightweight and exhibits good sealing performance and insulating properties.

SUMMARY

The disclosure relates to battery casing formed from a composition comprising: from about 10 wt. % to about 80 wt. % of a composite comprising a polyester resin and a long glass fiber, wherein the composite comprises from about 25 % to about 70 % long glass fiber based on the total weight of the composite; and from about 0.01 wt. % to about 50 wt. % of a flame retardant masterbatch, wherein the combined weight percent value of all components does not exceed 100 wt. %, and all weight percent values are based on the total weight of the composition. The composition exhibits a V0 rating at 1.5 mm and 3.0 mm thickness when tested in accordance with UL94 and the battery casing is free or substantially free of a metal. In further aspects, the battery casing substantially comprises a polymer resin. The battery casing may be suitable for electric vehicle voltage greater than 60 V and low voltage less than 60 V, and may meet or exceed requirements of GB/T 31467.3-2015 lithium-ion traction battery pack and system for electric vehicles - Part 3: Safety requirements and test methods.

The disclosure also relates methods of forming the disclosed compositions as well as articles formed therefrom.

DETAILED DESCRIPTION OF ILLUSTRATIVE EMBODIMENTS

The battery pack also often contains a battery management system (BMS), thermal management equipment, fuses, relays, sensors, among other components. Thus the battery pack may form a considerable contribution to the overall vehicle weight. However, the specific energy of the battery pack is crucial as it relates to the actual mass contribution of the pack to the electric vehicle, and is itself governed by all of the pack's elements, including the exterior casing. Conventional electric vehicle battery casings are constructed using steel or other metals, which while offering numerous advantages, may be replaced by lighter materials, including most notably, plastics. Indeed, some electric vehicle battery designs may have a metallic 'tray' with composite 'lids" meant to reduce the overall pack weight.

In addition, metals can be cumbersome to process and may require secondary operation, such as painting. Battery designs are often constructed to make best of use of available space in the relevant compartments. Accordingly, more intricate, stacked module designs may not be as easily implemented using metallic enclosures.

Injection molding as for polymers, may allow battery design engineers to construct alternative designs that may better utilize available vehicle space.

Since the external casing houses the electrochemical cells and other related components, the external casing desirably must also offer adequate protection from impact and intrusion. Lack of protection may result in catastrophic events such as fire and explosion. To this end, fully assembled electric vehicle battery packs are subjected to numerous regulatory tests that simulate extreme conditions. Battery casings must therefore be robust and feature designs that are suitably accommodating. Fire retardant performance is also desired for safety, thus the battery casing should offer appropriate resilience to direct flame exposure.

The disclosed compositions provide injection moldable, flame-retardant, all-plastic battery casings. These casings may be fully comprised of a plastic polymer and incorporate long-glass fiber resins with a dry-blended flame retardant master batch to form the final composition. The disclosed all-plastic battery casing may provide several advantages to conventional electric vehicle manufacturer casings, including lower weight, facile processing with potentially fewer operational steps, and a potentially lower cost. A fully plastic polymer battery casing as described herein may be potentially suitable for all electric vehicle high voltage (greater than 60 V) and low voltage (less than 60 V, for example, 12 V, 42 V, 48 V) batteries, as is used in battery electric (BEV), and plug-in hybrid (PHEV), as well as mild and micro-hybrid (MEV) vehicles.

The disclosure relates to battery casing formed from a composition comprising: from about 10 wt. % to about 80 wt. % of a composite comprising a polyester resin and a long glass fiber, wherein the composite comprises from about 25 % to about 70 % long glass fiber based on the total weight of the composite; and from about 0.01 wt. % to about 50 wt. % of a flame retardant masterbatch, wherein the combined weight percent value of all components does not exceed 100 wt. %, and all weight percent values are based on the total weight of the composition. The composition exhibits a V0 rating at 1.5 mm and 3.0 mm thickness when tested in accordance with UL94 and the battery casing is free or substantially free of a metal. In further aspects, the battery casing substantially comprises a polymer resin. The battery casing may be suitable for electric vehicle voltage greater than 60 V and low voltage less than 60 V, and may meet or exceed requirements of GB/T 31467.3-2015 lithium-ion traction battery pack and system for electric vehicles - Part 3: Safety requirements and test methods..

The disclosed fully plastic polymer may comprise polymer resin and long glass fiber (such as, for example VERTON™). The long glass fiber may provide stiffness characteristics of an equivalent short-glass fiber, but may also provide improved impact strength and resistance to crack propagation. Long-glass fiber filled resins therefore have significantly enhanced structural characteristics, while remaining suitably processable by way of injection molding.

In various aspects, the disclosed plastic polymer may comprise polybutylene terephthalate (PBT) VERTON™ with long glass fiber present in an amount of from 10 wt. % to 50 wt%. Other suitable resins may comprise polythalamide (PPA), polyamide (PA), polypropylene (PP), or other suitable polymer base resins. The polymer base resin may depend upon the type of application.

According to several aspects of the present disclosure, the components may be combined in a particular method. That is, to achieve the desired level of flame retardancy (FR) and associated fire performance, the long glass fiber may be combined with the polymer resin prior to molding with a flame retardant master batch. The resin containing long glass fiber and FR master batch may be subjected to dry-mixing prior to injection molding, resulting in a structural, flame retardant part which is potentially suitable for the demands of an electric vehicle (car, bus, etc.,) high voltage (greater than 60 V) and low voltage (less than 60 V, e.g. 12 V, 42 V, 48 V) battery casing.

The disclosed fully plastic casing structure may painted if desired, or coated internally or externally with suitable materials, such as electromagnetic shielding materials.

The present disclosure can be understood more readily by reference to the detailed description, examples, drawings, and claims described herein. It is to be understood that this disclosure is not limited to the specific thermoplastic compositions, articles, devices, systems, and/or methods disclosed unless otherwise specified, as such can, of course, vary. It is also to be understood that the terminology used herein is for the purpose of describing particular aspects only

and is not intended to be limiting. Those of ordinary skill in the relevant art will recognize and appreciate that changes and modifications can be made to the various aspects of the disclosure described herein, while still obtaining the beneficial results of the present disclosure. It will also be apparent that some of the desired benefits of the present disclosure can be obtained by selecting some of the features of the present disclosure without utilizing other features. The present description is provided as illustrative of the principles of the disclosure and not in limitation thereof. Various combinations of elements of this disclosure are encompassed by this disclosure, *e.g.*, combinations of elements from dependent claims that depend upon the same independent claim.

POLYMER RESIN

In various aspects, the disclosed composition for a battery casing may comprise a polymer base resin. The polymer base resin can comprise a thermoplastic resin, or a thermoset resin or a thermosetting polymer. Appropriate thermosetting resins can include phenol resin, urea resin, melamine-formaldehyde resin, urea-formaldehyde latex, xylene resin, diallyl phthalate resin, epoxy resin, aniline resin, furan resin, polyurethane, or combinations thereof. In some examples, polymer base resin can comprise a polyester (polyalkylene terephthalate), polyamide, polyetherketone, polyphthalamide, polyarylene ether, a polyphenylene sulfide, a polystyrene, polysiloxane copolymer, or a combination thereof. The polymer resin may also comprise blends and/or other types of combination of resins described above. In certain aspects, the polymer base resin comprises a polyalkylene terephthalate, a polyphenylene sulfide, a polyamide, a polyetherketone, a polyphthalamide, or a polystyrene.

The polymer base resin of the present disclosure may include a polyester such as a polyalkylene terephthalate. Polyesters, which include poly(alkylene dicarboxylates), liquid crystalline polyesters, and polyester copolymers, can be useful in the disclosed thermoplastic compositions of the present disclosure. Polyesters have repeating units of the following formula (A):

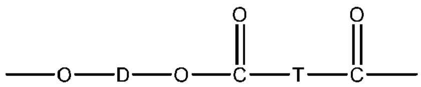 (A)

wherein T is a residue derived from a terephthalic acid or chemical equivalent thereof, and D is a residue derived from polymerization of an ethylene glycol, butylene diol, specifically 1,4- butane diol, or chemical equivalent thereof. Chemical equivalents of diacids include dialkyl esters, e.g., dimethyl esters, diaryl esters, anhydrides, salts, acid chlorides, acid bromides, and the like. Chemical equivalents of ethylene diol and butylene diol include esters, such as dialkylesters, diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions.

Examples of aromatic dicarboxylic acids include 1,4-naphthalenedicarboxylic acid, 1,5-naphthalenedicarboxylic acid, 2,6-naphthalenedicarboxylic acid, and combinations comprising at least one of the foregoing dicarboxylic acids. Exemplary cycloaliphatic dicarboxylic acids include norbornene dicarboxylic acids, 1,4-cyclohexanedicarboxylic acids, and the like. In a specific aspect, T is derived from a combination of terephthalic acid and isophthalic acid wherein the weight ratio of terephthalic acid to isophthalic acid is 99: 1 to 10:90 (or about 99: 1 to about 10:90), specifically 55: 1 to 50:50 (or about 55: 1 to about 1 : 1). Examples of C6-C12 aromatic diols include, but are not limited to, resorcinol, hydroquinone, and pyrocatechol, as well as diols such as 1,5 -naphthalene diol, 2,6- naphthalene diol, 1,4-naphthalene diol, 4,4'-dihydroxybiphenyl, bis(4-hydroxyphenyl)ether, bis(4-hydroxyphenyl)sulfone, and the like, and combinations comprising at least one of the foregoing aromatic diols. Exemplary C2-C12 aliphatic diols include, but are not limited to, straight chain, branched, or cycloaliphatic alkane diols such as propylene glycol, i.e., 1,2- and 1,3- propylene glycol, 2,2-dimethyl- 1,3 -propane diol, 2-ethyl-2 -methyl- 1,3-propane diol, 1,4-but- 2-ene diol, 1,3- and 1,5-pentane diol, dipropylene glycol, 2-methyl-1,5-pentane diol, 1,6- hexane diol, dimethanol decalin, dimethanol bicyclooctane, 1,4-cyclohexane dimethanol, including its cis- and trans-isomers, triethylene glycol, 1,10-decanediol; and combinations comprising at least of the foregoing diols.

In another aspect, the compositions of the present disclosure can include polyesters including, for example, aromatic polyesters, polyalkylene esters (also designated as poly(alkylene esters)) including poly(alkylene arylates), and poly(cycloalkylene diesters). Aromatic polyesters can have a polyester structure according to formula (A), wherein D and T are each aromatic groups as described hereinabove. In an aspect, useful aromatic polyesters can include, for example, poly(isophthalate-terephthalate-resorcinol)esters, poly(isophthalate-terephthalate-bisphenol A)esters, poly[(isophthalate-terephthalate-resorcinol)ester-co-(isophthalate-terephthalate- bisphenol A)] ester, or a combination comprising at least one of these. Also contemplated are aromatic polyesters with a minor amount, e.g., about 0.5 to

about 10 wt. %, based on the total weight of the polyester, of units derived from an aliphatic diacid and/or an aliphatic polyol to make copolyesters. Poly(alkylene arylates) can have a polyester structure according to formula (A), wherein T comprises groups derived from aromatic dicarboxylates, cycloaliphatic dicarboxylic acids, or derivatives thereof.

Examples of specifically useful T groups include, but are not limited to, 1,2-,1,3-, and 1,4-phenylene; 1,4- and 1,5-naphthylenes; cis- or trans- 1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans-1,4-(cyclohexylene)dimethylene. Examples of polyalkylene terephthalate include polyethylene terephthalate (PET), poly( 1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing polyesters may also be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s. Of these, a specific example is poly(1,4-cyclohexane-dimethanol-1,4-cyclohexanedicarboxylate) (PCCD), having recurring units of formula (B):

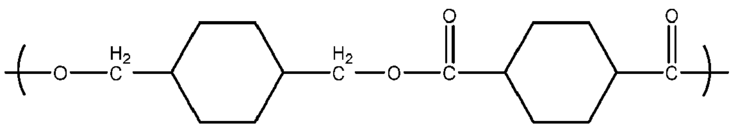
(B)

wherein, as described using formula (A), $R^2$ is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In one aspect, the polymer base resin may poly(1,4-butylene terephthalate) or PBT resin. Commercial examples of PBT include those available under the trade names VALOX™ 315, VALOX™ 195 and VALOX™ 176, manufactured by SABIC™. These examples of PBT may have an intrinsic viscosity of 0.1 deciliters per gram (dl/g) to about 2.0 dl/g (or 0.1 dl/g to 2 dl/g) as measured in a 60:40 phenol/tetrachloroethane mixture or similar solvent at 23 degrees Celsius (°C) to 30° C. In one aspect, the PBT resin may have a low intrinsic viscosity (of 0.1 dl/g to 1.4 dl/g (or about 0.1 dl/g to about 1.4 dl/g), specifically 0.4 dl/g to 1.4 dl/g (or about 0.4 dl/g to about 1.4 dl/g)). In further aspects, the PBT resin may have a high intrinsic viscosity. The polymer base resin may comprise a combination of a high and a low intrinsic viscosity PBT resin.

In yet further aspects, the polymer base resin may comprise polyester-polycarbonate copolymer. In one embodiment, polyester-polycarbonates contain repeating units of formula (A), above, wherein D is a divalent radical derived from a dihydroxy compound, and may be, for example, a $C_{2-10}$ alkylene radical, a $C_{6-20}$ alicyclic radical, a $C_{6-20}$ aromatic radical or a polyoxyalkylene radical in which the alkylene groups contain 2 to 6 carbon atoms, specifically 2, 3, or 4 carbon atoms; and T is a divalent radical derived from a dicarboxylic acid, and may be, for example, a $C_{2-10}$ alkylene radical, a $C_{6-20}$ alicyclic radical, a $C_{6-20}$ alkyl aromatic radical, or a $C_{6-20}$ aromatic radical.

In one aspect, D is a $C_{2-6}$ alkylene radical. In another embodiment, D is derived from an aromatic dihydroxy compound of formula (C):

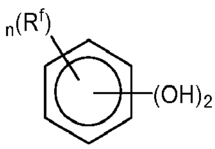
(C)

wherein each $R^f$ is independently a halogen atom, a $C_{1-10}$ hydrocarbon group, or a $C_{1-10}$ halogen substituted hydrocarbon group, and n is 0 to 4. The halogen is usually bromine. Examples of compounds that may be represented by the formula (7) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of terephthalic acid to isophthalic acid is 91:1 to 2:98. In another specific embodiment, D is a $C_{2-6}$ alkylene radical and T is p-phenylene, m-phenylene, naphthalene, a divalent cycloaliphatic radical, or a mixture thereof. This class of polyester includes the poly(alkylene terephthalates).

In a further aspect, carbonate units of formula (1) may also be derived from aromatic dihydroxy compounds of formula (7), wherein specific carbonate units are resorcinol carbonate units.

Specifically, the polyester unit of a polyester-polycarbonate can be derived from the reaction of a combination of isophthalic and terephthalic diacids (or derivatives thereof with resorcinol, bisphenol A, or a combination comprising one or more of these, wherein the molar ratio of isophthalate units to terephthalate units is 91:9 to 2:98, specifically 85:15 to 3:97, more specifically 80:20 to 5:95, and still more specifically 70:30 to 10:90. In case the polycarbonate comprises units derived from resorcinol and/or bisphenol A, the molar ratio of resorcinol carbonate units to bisphenol A carbonate units of 0:100 to 99:1, and the molar ratio of the mixed isophthalate-terephthalate polyester units to the polycarbonate units in the polyester-polycarbonate can be 1:99 to 99:1, specifically 5:95 to 90:10, more specifically 10:90 to 80:20. Where a blend of polyester-polycarbonate with polycarbonate is used, the ratio of polycarbonate to polyester-polycarbonate in the blend can be, respectively, 1:99 to 99:1, specifically 10:90 to 90:10.

In a specific aspect, the polymer base resin may comprise a resorcinol based aryl polyester or a resorcinol based polyester carbonate polymer. ITR (isophthalate terephthalate resorcinol) Resorcinol-based aryl polyesters and "resorcinol-based polyaryl esters" and "resorcinol-based polyarylate" shall all mean a copolymer comprising resorcinol moieties and resorcinol-based ester linkages and possibly other linkages also such as resorcinol-based polycarbonate linkages. These terms are meant to include both polyesters only containing ester bonds and polyester carbonates in instances where resorcinol-based polycarbonate linkages are present. Thus, the polyester-polycarbonate copolymer may comprise repeating structural carbonate units of bisphenol A and repeating structural ester units, which may be any copolymer of BPA polycarbonate and resorcinol phthalate (ITR) (D), and such as (E).

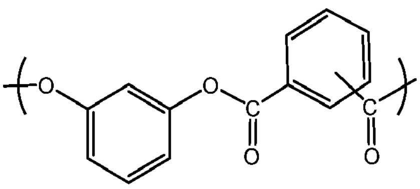 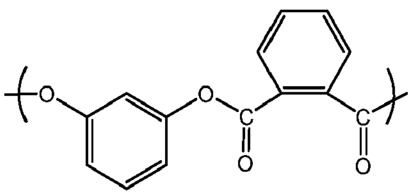 (D), (E)

These copolycarbonates may be synthesized by a skilled artisan, or can be obtained commercially, for example, SABIC LEXAN™ SLX resin. LEXAN™ SLX resin is ITR-polycarbonate copolymer with molecular weight 20,000-30,000, refractive index around 1.59-1.603.

As an example, a resorcinol-based polyaryl ester may comprise both carbonate linkages (e.g., between a resorcinol moiety and a bisphenol A moiety) and ester linkages (e.g., between a resorcinol moiety and an isophthalic acid moiety).

In some instances, the resorcinol-based polyarylate resin may contain at least about 40 mole % of moieties derived from resorcinol. The resorcinol moieties can be introduced as the reaction product of resorcinol, or functionalized resorcinol, with an aryl dicarboxylic acid or aryl dicarboxylic acid derivatives suitable for the formation of aryl ester linkages with the resorcinol. Suitable dicarboxylic acid derivatives include, for example, carboxylic acid halides, carboxylic acid esters and carboxylic acid salts.

The resorcinol-based polyarylate may further contain carbonate linkages derived from reaction of a bisphenol and a carbonate forming species, such as phosgene, making the resorcinol-based polyarylate a polyester carbonate copolymer. In another embodiment of the invention, resorcinol polyarylate carbonate copolymers will comprise the reaction products of iso- and terephthalic acid, resorcinol and optionally, bisphenol A and phosgene. In one aspect, the resorcinol polyester carbonate copolymer will be made in such a way that the number of bisphenol dicarboxylic ester linkages is minimized, for example by pre-reacting the resorcinol with the dicarboxylic acid to form an aryl polyester block and then reacting the aryl polyester block with the bisphenol and carbonate moiety to form the polycarbonate

portion of the copolymer. Examples of resorcinol ester containing polymers can be found in U.S. Pat. Nos. 6,861,482, 6,559,270, 6,265,522, 6,294,647, 6,291,589 and 5,916,997.

In further aspects, the disclosed composition may comprise a styrenic polymer or a polystyrene as the polymer base resin. The term "styrenic polymer" as used herein includes styrenic polymers prepared by methods known in the art including bulk, suspension, and emulsion polymerization, which contain at least 25 weight percent of structural units derived from monomer of the formula (F):

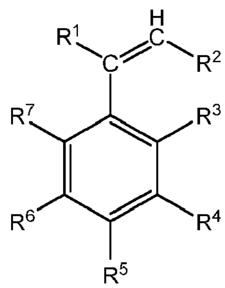

(F)

wherein $R^1$ and $R^2$ each independently represent a hydrogen atom, a Ci-Cs alkyl group, or a $C_2$-C8 alkenyl group; R 3 and R 7 each independently represent a hydrogen atom, or a Ci-C s alkyl group; and $R^4$, $R^5$, and $R^6$ each independently represent a hydrogen atom, a Ci-Cs alkyl group, or a $C_2$-C8 alkenyl group, or $R^3$ and $R^4$ are taken together with the central aromatic ring to form a naphthyl group. Specific alkenyl aromatic monomers include, for example, styrene and methylstyrenes such as alpha-methylstyrene and p-methylstyrene. In some embodiments, the alkenyl aromatic monomer is styrene.

Exemplary polystyrenes include homopolystyrenes (including atactic, syndiotactic, and isotactic polystyrenes) and rubber-modified polystyrenes (also known as "high-impact polystyrenes" or "HIPS"). In some aspects, the polystyrene comprises a homopolystyrene having a number average molecular weight of about 30,000 to about 100,000 atomic mass units, specifically about 40,000 to about 60,000 atomic mass units. Suitable homopolystyrenes are commercially available as, for example EB3300 from Chevron. In some embodiments, the polystyrene comprises a rubber-modified polystyrene comprising about 88 to about 94 weight percent polystyrene and about 6 to about 12 weight percent polybutadiene, with an effective gel content of about 10% to about 35%. Suitable rubber-modified polystyrenes are commercially available as, for example, GEH 1897 from SABIC, and D7022.27 from Chevron. The polystyrene according to the present disclosure may be a homopolystyrene.

As used herein, the term homopolystyrene refers to a homopolymer of styrene. Thus, the residue of any monomer other than styrene is excluded from the homopolystyrene. The homopolystyrene can be atactic, syndiotactic, or isotactic. The homopolystyrene may have a melt volume flow rate of 1.5 to 5 cubic centimeters per 10 minutes, measured at 200° C and 5-kilogram load according to ISO 1133. In some aspects, the polystyrene comprises a syndiotactic polystyrene. Other polystyrenes may be present in the disclosed composition; for example, a general purposes polystyrene may be present as a low Dk polymer resin.

Syndiotactic polystyrene may comprise a polystyrene with a highly regular stereochemical structure, that is to say, a highly syndiotactic configuration. That is, the phenyl groups and substituted phenyl groups of the side groups are alternately located at opposite positions with respect to the main polymer chain. The tacticity in the stereochemical structure may be quantitatively determined by measurement of the nuclear magnetic resonance (NMR) using an isotope of carbon ($^{13}$C-NMR). The tacticity measured by the $^{13}$C-NMR method can show the content of a sequence in which a specific number of the constituting units are bonded in sequence, such as a diad in which two constituting units are bonded in sequence, a triad in which three constituting units are bonded in sequence, and a pentad in which five constituting units are bonded in sequence. A syndiotactic polystyrene is herein defined as a polystyrene, poly(alkylstyrene), poly(halogenated styrene), poly(halogenated alkylstyrene), poly(alkoxystyrene), poly(vinylbenzoic acid ester), hydrogenated derivative of these polymers, mixtures comprising one of the foregoing polymers, or a copolymer containing constituting units of these polymers as the main components, which generally has the syndiotacticity of 75% or more, preferably 85% or more, expressed in terms of the content of the racemic diad, or 30% or more, preferably 50% or more, expressed in terms of the content of the racemic pentad.

Examples of syndiotactic polystyrene include polystyrene, poly(p-methylstyrene), poly(m-methylstyrene), poly(p-tertiary-butylstyrene), poly(p-chlorostyrene), poly(m-chlorostyrene), poly(p-fluorostyrene), hydrogenated polystyrene, copolymers containing comprising units of the above polymers and combinations comprising one of the foregoing syndiotactic polystyrenes.

The molecular weight of the styrenic polymer is not particularly limited. The weight-average molecular weight may be greater than or equal to about 10,000 atomic mass units (AMU), and preferably greater than or equal to about

50,000, as determined by gel permeation chromatography. The molecular weight distribution is not particularly limited, and syndiotactic polystyrene having various molecular weight distributions can be used. The melting point of the syndiotactic polystyrene is about 200 to about 310° C.

In some aspects, the polystyrene content is about 10 to about 90 weight percent, specifically about 15 to about 80 weight percent, more specifically about 20 to about 70 weight percent, still more specifically about 25 to about 60 weight percent, even more specifically about 30 to about 50 weight percent, yet more specifically about 35 to about 45 weight percent, based on the total weight of the composition.

In various aspects, the polymer base resin can comprise a polyaryl sulfide (or a poly(arylene) sulfide), such as a polyphenylene sulfide. Poly(arylene sulfide)s are a class of polymers containing arylene groups separated by sulfur atoms. They include poly(phenylene sulfide)s, for example poly(p-phenylene sulfide), and substituted poly(phenylene sulfide)s. Typical poly(arylene ether)s comprise at least 70 mole percent, specifically at least 90 mole percent, more specifically at least 95 mole percent, of recurring para-phenylene sulfide units having the structure (H)

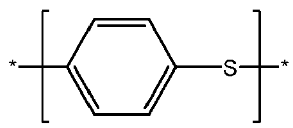
(H)

When the amount of said recurring units is less than 70 molar %, the heat resistance is somewhat limited. The remaining up to 30 mole percent of recurring units in the poly(arylene sulfide) can, in some aspects, have a structure selected from

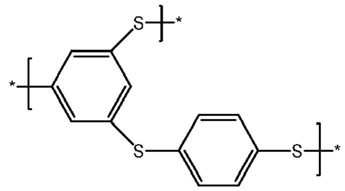
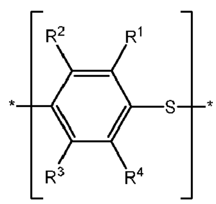

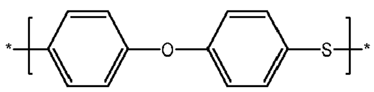
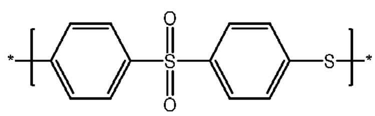

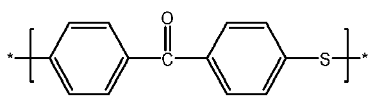
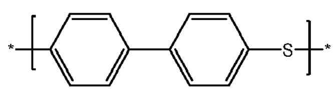

wherein $R^1$, $R^2$, $R^3$ and $R^4$ are, independently at each occurrence, hydrogen, halogen, $C_1$-$C_{12}$ hydrocarbyl, $C_1$-$C_{12}$hydrocarbyloxy, nitro, amino, carboxy, or the like.

The poly(arylene sulfide) can be a linear, branched, or cured polymer, or a mixture of at least two of the foregoing. The poly(arylene sulfide) can be functionalized or unfunctionalized. If the poly(arylene sulfide) is functionalized, the functional groups can include amino, carboxylic acid, metal carboxylate, disulfide, thiol, and metal thiolate groups. One method for incorporation of functional groups into poly(arylene sulfide) can be found in U.S. Pat. No. 4,769,424 to Takekoshi et al., which discloses incorporation of substituted thiophenols into halogen substituted poly(arylene sulfide)s. Another functionalizing method involves incorporation of chloro-substituted aromatic compounds containing the desired functionality reacted with an alkali metal sulfide and chloroaromatic compounds. A third functionalizing method involves reaction of poly(arylene sulfide) with a disulfide containing the desired functional groups, typically in the melt or in a suitable high boiling solvent such as chloronapthalene.

The melt viscosity of PPS used in the present disclosure is not particularly limited so far as the moldings which can be obtained. A melt viscosity of at least 100 Poise may be useful from the viewpoint of the toughness of PPS per se and that of 10,000 Poise or less may be useful from the viewpoint of the moldability. In some embodiments, the poly(arylene sulfide) can have a melt flow rate less than or equal to 100 grams per 10 minutes measured at 316° C. and 5 kilogram load according to ASTM D1238. Specifically, the melt flow rate may be 50 to 100 grams per 10 minutes.

The polymer base resin can comprise a polyamide resin. Polyamide resins can include a generic family of

resins known as nylons which can be characterized by the presence of an amide group (-C(O)NH-). The resins include repeating units linked by an amide group bond. Polyamide resins may be obtained according to well-known processes such as those described in U.S. Patent Nos. 2,071,250; 2,071,251; 2,130,523; 2,130,948; 2,241,322; 2,312,966; and 2,512,606. As an example, polyamides can be prepared by polymerizing a monoamine-monocarboxylic acid or a lactam thereof having at least two carbon atoms between the amino and carboxylic acid groups. Polyamides may also be prepared by polymerizing substantially equimolecular proportions of a carboxylic acid and a diamine containing at least two carbon atoms between the amino groups. In further examples, polyamides can be prepared by polymerizing a monoaminocarboxylic acid or a lactam thereof with substantially equimolecular proportions of a diamine and dicarboxylic acid. Polyamide resins are commercially available from a wide variety of sources. As used herein, substantially equimolecular proportions can refer to both equimolecular proportions and the departures therefrom which are involved in conventional techniques to stabilize the viscosity of the resultant polyamide. Copolymers of caprolactam with diacids and diamines are also useful.

Monoaminomonocarboxylic acids or lactams thereof may include compounds having from two to sixteen carbon atoms between the amino can carboxylic acid groups. For lactams, the carbon atoms form ring with the -CO-NH- group. Exemplary aminocarboxylic acids and lactams can include 6-aminocaproic acid, butyrolactam, enantholactam, pivaloactam, caprolactam, undecanolactam, capryllactam, dodecanolactam, and 3- and 4- aminobenzoic acids.

Diamines useful in polyamide preparation may include alkyl, aryl and alkylaryl diamines. Suitable diamines may be represented by the general formula $H_2N(CH_2)NH_2$ where n is an integer from 2 to 16. Exemplary diamines may include, but are not limited to, trimethylenediamine, pentamethylene diamine, tetramethylenediamine, octamethylenediamine, hexamethylenediamine, trimethyl hexamethylene diamine, metaxylylene diamine, meta-phenylene diamine, and the like. Other useful diamines include m-xylyene diamine, di-(4-aminophenyl)methane, di-(4-aminocyclohexyl)methane; 2,2-di-(4-aminophenyl)propane, 2,2-di-(4-aminocyclohexyl)propane, among others. Suitable dicarboxylic acids may be aromatic or aliphatic. Aromatic dicarboxylic acids may include isophthalic and terephthalic acids. Aliphatic dicarboxylic acids may be represented by the formula HOOC-Y-COOH where Y represents a divalent aliphatic group containing at least two carbon atoms. Exemplary dicarboxylic acids may include sebacic acid, suberic acid, octadecanedoic acid, glutaric acid, adipic acid, and pimelic acid. Other useful diacids for the preparation of nylons include azelaic acid, dodecane diacid, as well as terephthalic and isophthalic acids, and the like.

Polyamides may generally include aliphatic polyamides which feature an aliphatic main chain; high performance polyamides which feature repeating units of the semiaromatic polyphthalamide molecule; and aramides which feature repeating aromatic units.

Exemplary polyamide resins can include nylon-6 (polyamide 6) and nylon-6,6 (polyamide 6,6) which are available from a variety of commercial sources. Other exemplary polyamides can include nylon-4, nylon-4,6 (PA 46), nylon-12, nylon-6,10, nylon-6,9, nylon-6,12, nylon-9T, copolymer of nylon-6,6 and nylon-6, nylon 610 (PA610), nylon 11 (PA11), nylon 12 (PA 12), nylon 6-3-T (PA 6-3-T), polyarylamid (PA MXD 6), polyphthalamide (PPA) and/or poly-ether-block amide, and others such as the amorphous nylons, may also be useful. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane.

Mixtures of various polyamides, as well as various polyamide copolymers, are also useful. In some examples, the polyamide resin can include a combination of nylon resins.

In certain aspects, the polymer base resin may comprise a polyphthalamide resin. Polyphthalamides (PPA) are semi-aromatic, high temperature nylons that typically have melting points higher than 290° C. and glass transitions temperatures greater than 100° C. PPAs are generally based on polyamide 6T (PA 6T or nylon-6T). PPAs generally are copolymers that have various ratios of polyamide 6T, polyamide 61, and polyamide 6/6 to control properties such as melt flow, melting point, and glass transition temperature.

Polyphthalamides comprise repeating units having formula (I)

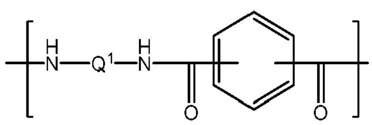
(I)

wherein $Q^1$ is independently at each occurrence a branched or unbranched alicyclic alkyl group having 4 to 8 carbons. In some aspects, $Q^1$ is independently at each occurrence a 1,6-hexyl group. Polyamide resins, in general characterized by the presence of an amide group (-C(O)NH-) which is the condensation product of a carboxylic acid and an amine. Polyphthalamides are the condensation product of terephthalic acid and an amine, isophthalic acid and an amine or a combination of terephthalic acid, isophthalic acid and an amine.

The polyphthalamide can be a block copolymer or a random copolymer comprising the units of formula (I) and

units of formula (J)

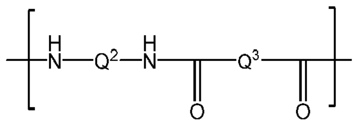
(J)

wherein $Q^2$ and $Q^3$ are independently at each occurrence a branched or unbranched alicyclic alkyl group having 4 to 12 carbons. $Q^2$ and $Q^3$ can be the same or different alicyclic alkyl group.

In some aspects, the polymer base resin comprises a polyarylether ketone (PAEK).

Polyaryl ether ketones comprise several polymer types containing aromatic rings, usually phenyl rings, linked primarily by ketone and ether groups in different sequences. Examples of PAEK resins include, but are not limited to, polyether ketones (PEK), polyether ether ketones (PEEK), polyether ketone ether ketone ketones (PEKEKK) and polyether ketone ketones (PEKK) and copolymers containing such groups as well as blends thereof. The PAEK polymers may comprise monomer units containing an aromatic ring, usually a phenyl ring, a ketone group and an ether group in any sequence. Low levels, for example less than 10 mole %, of addition linking groups may be present as long as they do not fundamentally alter the properties of the PAEK resin. PEEK is commercially available from Victrex Ltd. as VICTREX® PEEK. PEKEKK resin is commercially available from BASF Co. as ULTRAPEK. Polyether ether ketone resins are also available under the GATONE and KETASPIRE trade names from Solvay Co. and Solvay Advanced Polymers.

For example, several polyaryl ether ketones which are highly crystalline, with melting points above 300° C., can be used in blends according to the present disclosure. Examples of these crystalline polyaryl ether ketones are shown in the structures (K), (L), (M), (N), and (O) below.

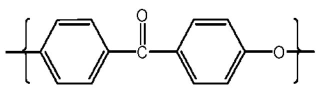 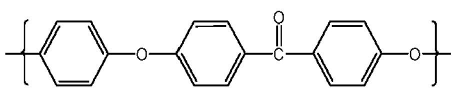
(K),(L)

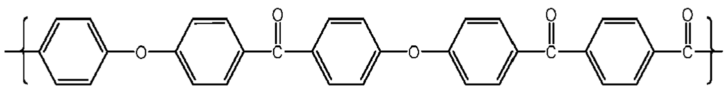
(M)

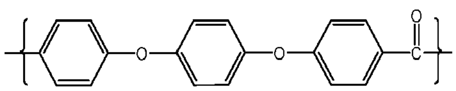 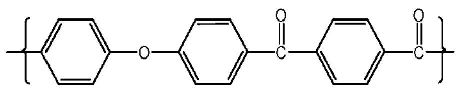
(N),(O)

The formation and properties of polyaryl ether ketones is well known in the art. For example, the electrophilic aromatic substitution (e.g., Friedel-Crafts catalyzed) reaction of aromatic diacyl halides with unsubstituted aromatic compounds such as diphenyl ether some of the early work is disclosed in, for example, U.S. Pat. No. 3,065,205.

Other examples of crystalline polyaryl ether ketones which are suitable for use herein can be generically characterized as containing repeating units of the following formula (Q):

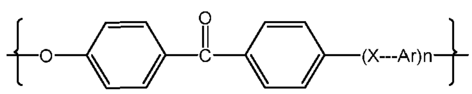
(P)

wherein Ar is independently a divalent aromatic radical selected from phenylene, biphenylene or naphthylene, X is independently -O-, -C(O)-, -O-Ar-C(O)-,-S-, $-SO_2-$ or a direct bond, and n is an integer of from 0 to about 10. PAEK resins can be prepared by methods well known in the art. The polyaryl ether ketones may have a reduced viscosity of about 0.4 to about 5.0 dl/g, as measured in concentrated sulfuric acid at 25° C. PAEK resin weight average molecular weight (Mw) may vary from 5,000 to 150,000 g/mole, specifically from about 10,000 to 80,000 g/mole. It is noted however that for NMT, crystallization speed may be more critical because the melt must enter the holes of the metal surface prior to crystallization.

The polymer base resin may comprise a polycarbonate-polysiloxane copolymer. As used herein, the term "polycarbonate-polysiloxane copolymer" is equivalent to polysiloxane-polycarbonate copolymer, polycarbonate-polysiloxane polymer, or polysiloxane-polycarbonate polymer. In various aspects, the polycarbonate-polysiloxane copolymer can be a block copolymer comprising one or more polycarbonate blocks and one or more polysiloxane blocks. The

polysiloxane-polycarbonate copolymer comprises polydiorganosiloxane blocks comprising structural units of the general formula (Q) below:

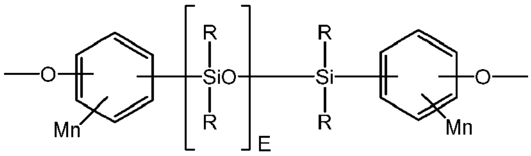

(Q)

wherein the polydiorganosiloxane block length (E) is from about 20 to about 60; wherein each R group can be the same or different, and is selected from a $C_{1-13}$ monovalent organic group; wherein each M can be the same or different, and is selected from a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$-$C_{12}$aralkoxy, $C_7$-$C_{12}$ alkylaryl, or $C_7$-$C_{12}$ alkylaryloxy, and where each n is independently 0, 1, 2, 3, or 4. The polysiloxane-polycarbonate copolymer also comprises polycarbonate blocks comprising structural units of the general formula (R) below:

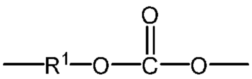

(R)

wherein at least 60 percent of the total number of $R^1$ groups comprise aromatic moieties and the balance thereof comprise aliphatic, alicyclic, or aromatic moieties. Polysiloxane-polycarbonates materials include materials disclosed and described in U.S. Patent No. 7,786,246, which is hereby incorporated by reference in its entirety for the specific purpose of disclosing various compositions and methods for manufacture of same.

Non-limiting examples of polysiloxane-polycarbonate copolymers can comprise various copolymers available from SABIC. In an aspect, the polysiloxane-polycarbonate copolymer can contain 60 % by weight polysiloxane content based upon the total weight of the polysiloxane-polycarbonate copolymer. In various aspects, the 60 % by weight polysiloxane block copolymer can have a weight average molecular weight (Mw) of from about 32,000 to 36,000 Daltons using gel permeation chromatography with a bisphenol A polycarbonate absolute molecular weight standard. In another example, the polysiloxane-polycarbonate block can comprise 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as "opaque" EXL C9030P). In various aspects, the weight average molecular weight of the 20 % polysiloxane block copolymer can be about 28,000 Daltons to about 32,000 Daltons when tested according to a polycarbonate standard using gel permeation chromatography (GPC) on a cross-linked styrene-divinylbenzene column and calibrated to polycarbonate references using a UV-VIS detector set at 264 nm on 1 mg/ml samples eluted at a flow rate of about 1.0 ml/minute. Moreover, the 20% polysiloxane block copolymer can have an MVR at 300 °C/1.2 kg of 7 $cm^3$/ 10 min and can exhibit siloxane domains sized in a range of from about 5 micron to about 20 micrometers (microns, $\mu$m).

In some aspects, the polymeric base resin can be present in the thermoplastic composition in an amount from about 20 wt. % to about 90 wt. %. In other aspects, the polymeric base resin can be present in an amount from about 30 wt. % to about 80 wt. %, or from about 40 wt. % to about 70 wt. %, or from about 50 wt. % to about 70 wt. %, or from about 55 wt. % to about 65 wt. %. The thermoplastic composition may comprise from about 50 weight percent (wt. %) to about 90 weight percent of the polybutylene terephthalate based on the total weight of the composition. The PBT resin may be present in any amount between the endpoints. For example, the composition may comprise about 70 wt. % of a polybutylene terephthalate or a combination of PBT resins.

## LONG GLASS FIBER

The disclosed thermoplastic compositions may comprise a long glass fiber. It is known that long glass fiber filled resins offer enhanced structural properties versus their short glass fiber counterparts, including a balance of impact strength and stiffness, with improved resistance to crack propagation.

The long glass fiber may also be produced with various shapes. Glass fibers having a length of about 0.4 mm (millimeter) or longer are referred to long fibers, and fibers shorter than this are referred to as short fibers.

The long glass fiber may have a round, flat, or irregular cross-section. Thus, use of non-round fiber cross sections is possible. In a still further aspect, the long glass fiber has a circular cross-section. In a yet further aspect, the diameter of the long glass fiber is from about 1 to about 15$\mu$m. The diameter of the long glass fiber may be from about

4 to about $_{10}$ μm. The diameter of the long glass fiber may be from about 1 to about $_{10}$ μm. In one aspect, the diameter of the long glass fibers can be about $_{10}$ μm.

The glass fibers used in select aspects of this disclosure may be surface-treated with a surface treatment agent containing a coupling agent to improve adhesion to the resin base. Suitable coupling agents can include, but are not limited to, silane-based coupling agents, titanate-based coupling agents or a mixture thereof. Applicable silane-based coupling agents include aminosilane, epoxysilane, amidesilane, azidesilane and acrylsilane. Organo metallic coupling agents, for example, titanium or zirconium-based organo metallic compounds, may also be used. In exemplary aspects, the glass fiber used in the invention may be selected from E-glass, S-glass, AR-glass, T-glass, D-glass R-glass, and combinations thereof. As an example, the glass fiber can be an "E" glass type which is a class of fibrous glass filaments included of lime-alumino-borosilicate glass.

As noted herein, in certain examples the resin composite disclosed herein includes from 5 wt. % to 70 wt. %, or from about 5 wt. % to about 65 wt. %, or from 10 wt. % to 65 wt. %, or from about 10 wt. % to about 65 wt. % long glass fiber. In other examples, the resin composite includes from 10 wt. % to 50 wt. %, or from about 10 wt. % to about 50 wt. % long glass fiber, or 10 wt. % to 40 wt. %, from about 10 wt. % to about 40 wt. % long, or from 10 wt. % to 30 wt. %, about 10 wt. % to about 30 wt. % long, or even from 10 wt. % to 20 wt. %, or from about 10 wt. % to about 20 wt. % long glass fiber.

In various aspects, the disclosed composition may comprise long glass fiber in a suitable polymer resin. For example, the composition may comprise polybutylene terephthalate (PBT) VERTON™ with long glass fiber present in an amount of from 10 wt. % to 50 wt%. Other suitable resins may comprise polythalamide (PPA), polyamide (PA), and polypropylene (PP), among other resins.

**FLAME RETARDANT MASTERBATCH**

In some aspects, the disclosed compositions may comprise a flame retardant additive as a masterbatch. The flame retardant master batch may comprise a suitable flame retardant additive in a suitable carrier resin. For example, the flame retardant masterbatch may comprise an oligomer of tetrabromobisphenol A (TBBA, e.g. BC-58), a master batch of antimony trioxide ($Sb_2$O3) and PBT (80:20 by weight), and another suitable carrier such as PBT, in said order ratios of 50:25:25, by weight.

A flame retardant master batch may comprise additional components, such as talc ($Mg_3Si_4O_{10}(OH)_2$), or other flame retardant synergists, other pigments such as carbon black, or other supporting components such as polytetrafluoroethylene. Accordingly, $Sb_2O_3$ master batch or other components are reduced in weight in the final formulation.

According to various aspects of the present disclosure, the flame retardant master batch may be produced by compounding and pelletization in similar length (+/- 2 millimeters, mm) to the long glass fiber VERTON™ pellets to prevent segregation and aid mixing. The FR master batch may be up included from 0-50% by weight, according to the desired level of flame retardancy.

The flame retardant additive of the flame retardant masterbatch may comprise a non-bromine flame retardant additive. The flame retardant additive may be free of, or substantially free of, halogen, such as bromine. In further aspects, the flame retardant additive can comprise an alkali metal salt. For example, the flame retardant additive may comprise an alkali metal salt of perfluorinated alkyl sulfonates. The flame retardant may comprise an alkali metal salt of perfluorinated C1-C16 alkyl sulfonates such as potassium perfluorobutane sulfonate (Rimar salt), potassium perfluoroctane sulfonate, tetraethylammonium perfluorohexane sulfonate, potassium diphenylsulfone sulfonate

(KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as $Na_2CO_3$, $K_2CO_3$, $MgCO_3$, $CaCO_3$, and $BaCO_3$ or fluoro-anion complex such as $Li_3AlF_6$, BaSiF6, $KBF_4$, $K_3AlF_6$, $KAlF_4$, $K_2SiF_6$, and/or $Na_3AlF_6$ or the like. Rimar salt and KSS and NATS, alone or in combination with other flame retardants, are particularly useful in the compositions disclosed herein. In an aspect, the thermoplastic resin can comprise from about 0.01 wt. % to about 1 wt. % of potassium perfluorobutane sulfonate, Rimar salt.

In further aspects, the flame retardant additive does not contain a halogen such as bromine or chlorine, and can comprise phosphorous. Non-brominated and non-chlorinated phosphorus-containing flame retardants can include, for example, organic phosphates and organic compounds containing phosphorus-nitrogen bonds. Exemplary di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like. Other exemplary phosphorus-containing flame retardant additives include phosphonitrilic chloride, phosphorus ester amides, phosphoric acid amides, phosphonic acid amides, phosphinic acid amides, tris(aziridinyl) phosphine oxide, polyorganophosphazenes (such as phenoxycyclophosphazene), and pol yorganophosphonates.

The composition may comprise a flame retardant masterbatch as described herein in an amount of from about 0.01 wt. % to about 50 wt. %. In some examples, the flame retardant masterbatch may be present in an amount of from about 0.01 wt. % to about 40 wt. %, 0.01 wt. % to about 30 wt. %, 5 wt. % to about 40 wt. %, 5 wt. % to about 30 wt.

OTHER ADDITIVES

The disclosed compositions can optionally comprise one or more additives conventionally used in the manufacture of molded thermoplastic parts with the proviso that the optional additives do not adversely affect the desired properties of the resulting composition. Mixtures of optional additives can also be used. Such additives may be mixed at a suitable time during the mixing of the components for forming the composite mixture. For example, the disclosed thermoplastic compositions can comprise one or more fillers, plasticizers, stabilizers, anti-static agents, flame-retardants, impact modifiers, colorant, antioxidant, and/or mold release agents. In one aspect, the composition further comprises one or more optional additives selected from an antioxidant, flame retardant, inorganic filler, and stabilizer.

Exemplary heat stabilizers include, for example, organo phosphites; phosphonates; phosphates, or combinations including at least one of the foregoing heat stabilizers. Heat stabilizers are generally used in amounts of from 0.01 to 0.5 parts by weight based on 100 parts by weight of the total composition, excluding any filler.

Exemplary antioxidants include, for example, organophosphites; alkylated monophenols or polyphenols; alkylated reaction products of polyphenols with dienes; butylated reaction products of para-cresol or dicyclopentadiene; alkylated hydroquinones; hydroxylated thiodiphenyl ethers; alkylidene-bisphenols; benzyl compounds; amides or esters of beta-(3,5-di-tert-butyl-4-hydroxyphenyl)-propionic acid; esters of beta-(5-tert-butyl-4-hydroxy-3-methylphenyl)-propionic acid with monohydric or polyhydric alcohols; esters of thioalkyl or thioaryl compounds; or combinations including at least one of the foregoing antioxidants. Antioxidants are generally used in amounts of from 0.01 to 0.5 parts by weight, based on 100 parts by weight of the total composition, excluding any filler.

The disclosed thermoplastic compositions can further comprise an optional filler, such as, for example, an inorganic filler or reinforcing agent. The specific composition of filler, if present, can vary, provided that the filler is chemically compatible with the remaining components of the thermoplastic composition. In one aspect, the thermoplastic composition comprises a mineral filler such as talc.

In another aspect, an exemplary filler can comprise metal silicates and silica powders; boron-containing oxides of aluminum (Al), magnesium (Mg), or titanium (Ti); anhydrous or hydrated calcium sulfate; wollastonite; hollow and/or solid glass spheres; kaolin; single crystal metallic or inorganic fibers or "whiskers"; glass or carbon fibers (including continuous and chopped fibers, including flat glass fibers) ; sulfides of molybdenum (Mo) or zinc (Zn); barium compounds; metals and metal oxides; flaked fillers; fibrous fillers; short inorganic fibers reinforcing organic fibrous fillers formed from organic polymers capable of forming fibers (e.g., polyether ether ketone (PEEK), polyetherimide (PEI), polytetrafluoroethylene (PTFE), polyphenylene sulfide (PPS)); and fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Exemplary light stabilizers include, for example, benzotriazoles, 2-(2-hydroxy-5-tert-octylphenyl)-benzotriazole and 2-hydroxy-4-n-octoxy benzophenone or a combination thereof. Light stabilizers are generally used in amounts of from 0.1 to 1.0 parts by weight (pbw) or about 0.1 pbw to about 1.0 pbw, based on 100 parts by weight of the total composition, excluding any filler.

Exemplary plasticizers include, for example, phthalic acid esters such as dioctyl-4,5-epoxy-hexahydrophthalate, tris-(octoxycarbonylethyl)isocyanurate, tristearin, epoxidized soybean oil or the like, or combinations including at least one of the foregoing plasticizers. Plasticizers are generally used in amounts of from 0.5 to 3.0 parts by weight, or from about 0.5 pbw to about 3 pbw, based on 100 parts by weight of the total composition, excluding any filler.

Exemplary antistatic agents include, for example, glycerol monostearate, sodium stearyl sulfonate, sodium dodecylbenzenesulfonate or the like, or combinations of the foregoing antistatic agents. In one aspect, carbon fibers, carbon nanofibers, carbon nanotubes, carbon black, or any combination of the foregoing may be used in a polymeric resin containing chemical antistatic agents to render the composition electrostatically dissipative.

Exemplary mold releasing agents or lubricants include for example stearates (including metal or alkyl stearates) or waxes. When used, mold releasing agents are generally used in amounts of from 0.1 to 1.0 parts by weight (or from about 0.1 pbw to about 1 pbw), or from 0.1 to 5 parts by weight (or from about 0.1 pbw to about 5 pbw) based on 100 parts by weight of the total composition, excluding any filler.

PROPERTIES

The disclosed compositions combine a polymer base resin, a long glass fiber, and a flame retardant masterbatch. The disclosed compositions may be suitable as a battery casing for a number of reasons. The disclosed composition may be free or substantially free of a metal. In further examples, the battery casing may substantially comprise a polymer

resin.

In some examples, the disclosed compositions exhibits a Vo rating at 1.5 mm and 3.0 mm thickness when tested in accordance with UL94

A battery casing comprised of the disclosed composition may exhibit certain advantageous properties. The battery casing may be suitable for electric vehicle voltage greater than 60 V and low voltage less than 60 V. In some examples, the battery casing meets or exceeds requirements of GB/T 31467.3-2015 lithium-ion traction battery pack and system for electric vehicles - Part 3: Safety requirements and test methods. Methods of Manufacture

In one aspect, the method comprises forming a plastic composition. The method may comprise combining all the components except the continuous glass fiber into a high-speed mixer and uniformly mixing. The mixture may be subjected to melt extrusion and sent to an impregnator. Meanwhile, the continuous glass fiber may be sent into the impregnator to carry out disperse impregnation with the molten material. Die drawing at a setting port of the impregnator may be carried out followed by cooling, blow-drying, and granulating to obtain the plastic composition.

Articles of Manufacture

Shaped, formed, or molded articles including the thermoplastic compositions are also provided. The thermoplastic compositions can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, tapes and laminates formed from tapes, radio frequency identifications (RFID) applications, automotive applications, and the like.

In a further aspect, the resulting disclosed compositions can be used to provide any desired shaped, formed, or molded articles. For example, the disclosed thermoplastic compositions may be molded into useful shaped articles by a variety of means such as injection molding, extrusion, rotational molding, blow molding and thermoforming. As noted above, the disclosed thermoplastic compositions are particularly well suited for use in the manufacture of electronic components and devices. As such, according to some aspects, the disclosed thermoplastic compositions can be used to form articles such as printed circuit board carriers, burn in test sockets, flex brackets for hard disk drives, and the like.

In a specific example, the disclosed plastic composition is particularly useful as a battery casing. A lithium ion battery case flame-retardant material disclosed by the invention has higher strength and toughness, may not be easily combusted in naked fire, may effectively lower the possibility of battery combustion accidents, and may ensure that the case has high plasticity and compressive strength.

ASPECTS

The present disclosure comprises at least the following aspects.

Aspect 1. A battery casing formed from a composition comprising: from about 10 wt. % to about 80 wt. % of a composite comprising a polyester resin and a long glass fiber, wherein the composite comprises from about 25 % to about 70 % long glass fiber based on the total weight of the composite; from about 0.01 wt. % to about 50 wt. % of a flame retardant masterbatch; wherein the combined weight percent value of all components does not exceed 100 wt. %, and all weight percent values are based on the total weight of the composition, wherein the composition exhibits a Vo rating at 1.5 mm and 3.0 mm thickness when tested in accordance with UL94 wherein the battery casing is free or substantially free of a metal, wherein the battery casing substantially comprises a polymer resin, wherein the battery casing is suitable for electric vehicle voltage greater than 60 V and low voltage less than 60 V, and wherein the battery casing meets or exceeds requirements of UL2580.

Aspect 2. The battery casing of aspect 1, wherein the flame retardant additive comprises an antimony trioxide and polybutylene terephthalate masterbatch with tetrabromobisphenol.

Aspect 3. The battery casing of any of aspects 1-2, wherein the flame retardant additive further comprises an additional additive.

Aspect 4. The battery casing of aspect 3, wherein the additional additive comprises a flame retardant synergist.

Aspect 5. The battery casing of any of aspects 1-4, wherein the polymer rein comprises polythalamide, polyamide, polypropylene, polyester, or a combination thereof.

Aspect 6. The battery casing of any of aspects 1-4, wherein the polymer resin comprises polybutylene terephthalate.

Aspect 7. A composition comprising: from about 10 wt. % to about 80 wt. % of a polymer resin; from about 10 wt. % to about 70 wt. % of long glass fiber; from about 0.01 wt. % to about 50 wt. % of a flame retardant additive, wherein the flame retardant additive comprises a flame retardant masterbatch; wherein the combined weight percent value of all components does not exceed 100 wt. %, and all weight percent values are based on the total weight of the composition, wherein the composition exhibits a Vo rating at 1.5 mm and 3.0 mm thickness when tested in accordance

with UL94.

Aspect 8. The composition of aspect 7, wherein the flame retardant additive comprises an antimony trioxide and polybutylene terephthalate masterbatch with tetrabromobisphenol.

Aspect 9. The composition of any of aspects 7-8, wherein the flame retardant additive further comprises an additional additive.

Aspect 10. The composition of aspect 9, wherein the additional additive comprises a flame retardant synergist.

Aspect 11. The composition of any of aspects 7-10, wherein the polymer resin comprises polythalamide, polyamide, polypropylene, polyester, or a combination thereof.

Aspect 12. The composition of any of aspects 7-10, wherein the polymer resin comprises polybutylene terephthalate.

Aspect 13. The composition of any of aspects 7-12, wherein the composition is a component of a battery casing.

Aspect 14. A battery casing comprising the composition of any of aspects 1-13, wherein the battery casing is free of or substantially free of a metal.

Aspect 15. The battery casing of aspect 9, wherein the battery casing meets or exceeds requirements of GB/T 31467.3-2015 lithium-ion traction battery pack and system for electric vehicles - Part 3: Safety requirements and test methods

Aspect 16. A method of forming a composition, the method comprising: Forming a flame retardant masterbatch; and Combining the flame retardant masterbatch and a composite to form a composition, wherein the composite comprises a polymer resin and a long glass fiber to and, wherein the composite comprises from about 30% to 50% long glass fiber.

Unless otherwise expressly stated, it is in no way intended that any method set forth herein be construed as necessarily requiring that its steps be performed in a specific order. Where a method claim does not specifically state in the claims or descriptions that the steps are to be limited to a specific order, it is no way intended that an order be inferred, in any respect.

All publications mentioned herein are incorporated herein by reference to, for example, describe the methods and/or materials in connection with which the publications are cited.

It is also to be understood that the terminology used herein is for describing particular aspects only and is not intended to be limiting. As used in the specification and in the claims, the term "comprising" may include the aspects "consisting of' and "consisting essentially of." Unless defined otherwise, all technical and scientific terms used herein have the same meaning as commonly understood by one of ordinary skill in the art to which this disclosure belongs.

Unless otherwise specified, average molecular weights refer to weight average molecular weights ($M_w$) and percentages refer to weight percentages (wt. %) which, unless specifically stated to the contrary, are based on the total weight of the composition in which the component is included. In all cases, where combinations of ranges are provided for a given composition, the combined value of all components does not exceed 100 wt%.

Component materials to be used to prepare disclosed thermoplastic compositions of the disclosure as well as the thermoplastic compositions themselves to be used within methods are disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. This concept applies to all aspects of this application including, but not limited to, steps in methods of making and using the thermoplastic compositions of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

Compounds disclosed herein are described using standard nomenclature. For example, any position not substituted by any indicated group is understood to have its valency filled by a bond as indicated, or a hydrogen atom.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, *e.g.*, polycarbonate polymers, by methods well known to a person having ordinary skill in the art using molecular weight standards, *e.g.*, polycarbonate standards or polystyrene standards, preferably certified or traceable

molecular weight standards.

As used herein, the terms "weight average molecular weight" or "Mw" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, *e.g.* polycarbonate polymers, by methods well known to a person having ordinary skill in the art using molecular weight standards, *e.g.* polycarbonate standards or polystyrene standards, preferably certified or traceable molecular weight standards.

The terms "polycarbonate" or "polycarbonates" as used herein includes copolycarbonates, homopolycarbonates and (co)polyester carbonates.

As used herein, the term "recycled polycarbonate," or "recycled PC," or "recycled polycarbonate," or "post-consumer recycled PC" refers to a recycled polycarbonate that that is reclaimed from a post-consumer source.

In one aspect, "substantially free of' may refer to less than 0.5 wt. % or less than about 0.5 wt.% present in a given composition or component. In another aspect, substantially free of can be less than 0.1 wt. %, or less than about 0.1 wt.%. In another aspect, substantially free of can be less than 0.01 wt. %, or less than about 0.01 wt.%. In yet another aspect, substantially free of can be less than 100 parts per million (ppm), or less than about 100 ppm. In yet another aspect, substantially free can refer to an amount, if present at all, below a detectable level.

As used herein, th specific energy of an electrochemical cell, typically denoted in watt-hours per kilogram (Wh kg-1), is an important measure of cell performance, and describes the amount of power (W) that the electrochemical cell can deliver in a one-hour period with respect to 1 kg of its mass.

EXAMPLES

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Best efforts have been made to ensure accuracy with respect to numbers (*e.g.*, amounts, temperature, etc.), but some errors and deviations should be accounted for. Unless indicated otherwise, weight percent, temperature is in degrees Celsius (°C) (ambient temperature unless specified otherwise), and pressure is at or near atmospheric.

Samples were evaluated for the flame retardant performance. Flame retardancy level $V_0$ (at 1.5 and 3.0 mm part thicknesses) has been attained by the UL94 test method for compositions based on 30% and 50% long glass PBT.

Compositionally, to achieve V0 ratings as described, three such examples use the following, by wt%:

Table 1. Flame retardant masterbatches

| | Example 1 | Example 2 | Example 3 |
|---|---|---|---|
| TBBPA; tetrabromobisphenol A, flame retardant | 50% | 50% | 50% |
| Antimony oxide; a masterbatch of $Sb_2O_3$ (Sb2O3 80%; PBT 20%) | 25% | 25% | 25% |
| PBT | 25% | 24% | 23% |
| PTFE; polytetrafluoroethylene, anti-drip agent | | 1% | - |
| Carbon black | - | - | 2% |

The FR masterbatch was blended with the LGF-PBT at 50%), which dilutes the amount of LGF in the final blended/molded composition. According to the amount of FR master batch added: e.g. a molded battery casing composition consisting of: PBT with 50% LGF + 15% FR MB. After dry blending and molding, the final article contains 42.5% LGF In the second example, PBT with 50% LGF + 12.5% FR MB. After molding, the final article contains 43.75% LGF. In the third example, PBT with 50% LGF + 20% FR MB. After molding, the final article contains 40% LGF.

In retaining as much of the mechanical properties as possible, the LGF % is desirably as high as possible in

the final article. Dry-mixing 30% LGF PBT with between 17.5 and 20.0% of the above master batches attained FR V0 rating at 1.5 and 3.0 mm. Dry-mixing 50% LGF PBT with between 15.0 and 20.0% of the above master batches attained FR V0 rating at 1.5 and 3.0 mm. With example 3, Vo at 1.5 mm and 3.0 mm with greater than or equal to 12.5% FR MB was observed when blending with 50% LGF PBT. To determine the applicability of the prepared flame retardant long glass fiber PBT compositions, a partially assembled battery pack was assessed according to GB/T 31467.3-2015 (Lithium-ion traction battery pack and system for electric vehicles - Part 3: Safety requirements and test methods), which is a GB (China) standard based on ISO 12405-3. The long glass fiber-based pack material shall be subjected therein to a number of physical abuse conditions, including crush, drop, fire resistance, etc. to assess its suitability.

The FR MB is dry-blended with either 30%, or, preferably, 50% LGF in PBT. The addition of greater than 15 wt% FR MB with 50% LGF PBT yields FR Vo, and 17.5% FR MB with 30% LGF PBT. (Example 3 provided Vo at 12.5%, but this statement is accurate since all examples at 15% with 50% LGF yield $V_0$.) With addition of 15 wt% FR MB, the LGF content in the final material is 42.5 wt%, accordingly. The amount of $Sb_2O_3$-PBT MB can be significantly reduced with addition of e.g. talc to also yield a Vo rating with the same FR MB loading.

It will be apparent to those skilled in the art that various modifications and variations can be made in the present disclosure without departing from the scope or spirit of the disclosure. Other aspects of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A battery casing formed from a composition comprising:

from about 10 wt. % to about 80 wt. % of a composite comprising a polyester resin and a long glass fiber, wherein the composite comprises from about 25 % to about 70 % long glass fiber based on the total weight of the composite;
from about 0.01 wt. % to about 50 wt. % of a flame retardant masterbatch;
wherein the combined weight percent value of all components does not exceed 100 wt. %, and all weight percent values are based on the total weight of the composition,
wherein the composition exhibits a Vo rating at 1.5 mm and 3.0 mm thickness when tested in accordance with UL94
wherein the battery casing is free or substantially free of a metal,
wherein the battery casing substantially comprises a polymer resin,
wherein the battery casing is suitable for electric vehicle voltage greater than 60 V and low voltage less than 60 V, and
wherein the battery casing meets or exceeds requirements of UL2580.

**2.** The battery casing of claim 1, wherein the flame retardant additive comprises an antimony trioxide and polybutylene terephthalate masterbatch with tetrabromobisphenol.

**3.** The battery casing of any of claims 1-2, wherein the flame retardant additive further comprises an additional additive.

**4.** The battery casing of claim 3, wherein the additional additive comprises a flame retardant synergist.

**5.** The battery casing of any of claims 1-4, wherein the polymer rein comprises polythalamide, polyamide, polypropylene, polyester, or a combination thereof.

**6.** The battery casing of any of claims 1-4, wherein the polymer resin comprises polybutylene terephthalate.

**7.** A composition comprising:

from about 10 wt. % to about 80 wt. % of a polymer resin;
from about 10 wt. % to about 70 wt. % of long glass fiber;

from about 0.01 wt. % to about 50 wt. % of a flame retardant additive, wherein the flame retardant additive comprises a flame retardant masterbatch;
wherein the combined weight percent value of all components does not exceed 100 wt. %, and all weight percent values are based on the total weight of the composition,
wherein the composition exhibits a Vo rating at 1.5 mm and 3.0 mm thickness when tested in accordance with UL94.

**8.** The composition of claim 7, wherein the flame retardant additive comprises an antimony trioxide and polybutylene terephthalate masterbatch with tetrabromobisphenol.

**9.** The composition of any of claims 7-8, wherein the flame retardant additive further comprises an additional additive.

**10.** The composition of claim 9, wherein the additional additive comprises a flame retardant synergist.

**11.** The composition of any of claims 7-10, wherein the polymer resin comprises polythalamide, polyamide, polypropylene, polyester, or a combination thereof.

**12.** The composition of any of claims 7-10, wherein the polymer resin comprises polybutylene terephthalate.

**13.** A battery casing comprising the composition of any of claims 1-13, wherein the battery casing is free of or substantially free of a metal.

**14.** The battery casing of claim 13, wherein the battery casing meets or exceeds requirements of GB/T 31467.3-2015 lithium-ion traction battery pack and system for electric vehicles - Part 3: Safety requirements and test methods

**15.** A method of forming a composition, the method comprising:

Forming a flame retardant masterbatch; and
Combining the flame retardant masterbatch and a composite to form a composition, wherein the composite comprises a polymer resin and a long glass fiber to and, wherein the composite comprises from about 30% to 50% long glass fiber.

Europäisches Patentamt
European Patent Office
Office européen des brevets

# EUROPEAN SEARCH REPORT

Application Number
EP 19 15 5031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CN 103 113 706 A (HEFEI GENIUS NEW MAT CO LTD) 22 May 2013 (2013-05-22)<br>* abstract *<br>----- | 1-15 | INV.<br>H01M2/10 |
| X | CN 107 216 650 A (ZHONGSHAN COMPLORD NEW MAT CO LTD) 29 September 2017 (2017-09-29)<br>* abstract *<br>----- | 7-15 | |
| X | CN 101 817 978 A (SHENZHEN KEJU NEW MATERIAL CO LTD)<br>1 September 2010 (2010-09-01)<br>* abstract *<br>----- | 1-15 | |
| X | CN 101 418 100 A (SHANGHAI KINGFA SCI & TECH CO [CN]) 29 April 2009 (2009-04-29)<br>* abstract *<br>----- | 7-15 | |

TECHNICAL FIELDS SEARCHED (IPC)

H01M

The present search report has been drawn up for all claims

1

| Place of search | Date of completion of the search | Examiner |
|---|---|---|
| Munich | 13 June 2019 | Koessler, Jean-Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 15 5031

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2019

| Patent document cited in search report | Publication date | Patent family member(s) | Publication date |
| --- | --- | --- | --- |
| CN 103113706 A | 22-05-2013 | NONE | |
| CN 107216650 A | 29-09-2017 | NONE | |
| CN 101817978 A | 01-09-2010 | NONE | |
| CN 101418100 A | 29-04-2009 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8835033 B
- CN 103113706
- CN 203562452
- US 6861482 B
- US 6559270 B
- US 6265522 B
- US 6294647 B
- US 6291589 B
- US 5916997 A
- US 4769424 A, Takekoshi
- US 2071250 A
- US 2071251 A
- US 2130523 A
- US 2130948 A
- US 2241322 A
- US 2312966 A
- US 2512606 A
- US 3065205 A
- US 7786246 B